# EUROPÄISCHE PATENTSCHRIFT

(11) **EP 2 852 453 B1**
(45) Veröffentlichungstag und Bekanntmachung des Hinweises auf die Patenterteilung: **30.05.2018**
(21) Anmeldenummer: 13719462.7
(22) Anmeldetag: 22.04.2013
(51) Int. Cl.: B01D 53/14

(54) **VERFAHREN ZUR ABSORPTION VON CO2 AUS EINER GASMISCHUNG**
METHOD FOR ABSORBING CO2 FROM A GAS MIXTURE
PROCÉDÉ D'ABSORPTION DE CO2 D'UN MÉLANGE DE GAZ

(30) Priorität: 07.05.2012 DE 102012207509
(43) Veröffentlichungstag der Anmeldung: 01.04.2015
(73) Patentinhaber: Evonik Degussa GmbH, 45128 Essen (DE)
(72) Erfinder: SEILER ,Matthias, 40627 Düsseldorf - Unterbach (DE); WITTHAUT , Daniel, 63505 langenselbold (DE)
(86) Internationale Anmeldenummer: PCT/EP2013/058288
(87) Internationale Veröffentlichungsnummer: WO 2013/167367

(56) Entgegenhaltungen:
- EP-A1- 2 532 414
- EP-A2- 1 582 250
- WO-A1-2010/089257
- WO-A1-2012/062830
- FR-A1- 2 900 841
- US-A1- 2009 199 709
- US-B2- 7 419 646

## Beschreibung

Die Erfindung betrifft ein Verfahren zur Absorption von CO₂ aus einer Gasmischung.

In zahlreichen industriellen und chemischen Prozessen treten Gasströme auf, die einen unerwünschten Gehalt von CO₂ aufweisen, der für die weitere Verarbeitung, für den Transport oder für eine Vermeidung von CO₂-Emissionen verringert werden muss.

Im industriellen Maßstab werden zur Absorption von CO₂ aus einer Gasmischung üblicherweise wässrige Lösungen von Alkanolaminen als Absorptionsmedium eingesetzt. Das beladene Absorptionsmedium wird durch Erwärmen, Entspannen auf einen niedrigeren Druck oder Strippen regeneriert, wobei das Kohlendioxid desorbiert wird. Nach dem Regenerationsprozess kann das Absorptionsmedium wieder verwendet werden. Diese Verfahren sind zum Beispiel in Rolker, J.; Arlt, W.; "Abtrennung von Kohlendioxid aus Rauchgasen mittels Absorption" in Chemie Ingenieur Technik 2006, 78, Seiten 416 bis 424 sowie in Kohl, A. L.; Nielsen, R. B., "Gas Purification", 5. Aufl., Gulf Publishing, Houston 1997 beschrieben.

Diese Verfahren haben jedoch den Nachteil, dass zur Abtrennung von CO₂ durch Absorption und nachfolgende Desorption relativ viel Energie benötigt wird und dass bei der Desorption nur ein Teil des absorbierten CO₂ wieder desorbiert wird, so dass in einem Zyklus aus Absorption und Desorption die Kapazität des Absorptionsmediums nicht ausreichend ist.

US 7,419,646 beschreibt ein Verfahren zur Entsäuerung von Abgasen, bei dem ein Absorptionsmedium verwendet wird, das bei der Absorption des sauren Gases zwei voneinander trennbare Phasen ausbildet. Als reaktive Verbindung zur Absorption eines sauren Gases wird in Spalte 6 unter anderem 4-Amino-2,2,6,6-tetramethylpiperidin genannt. Das Verfahren von US 7,419,646 hat den Nachteil, dass zusätzliche Apparate für die Trennung der bei der Absorption anfallenden zwei Phasen erforderlich sind.

US 2009/0199709 beschreibt ein ähnliches Verfahren, bei dem nach Absorption des sauren Gases durch Erhitzen des beladenen Absorptionsmediums zwei voneinander trennbare Phasen ausgebildet und voneinander getrennt werden. Auch hier wird als geeignete reaktive Verbindung zur Absorption eines sauren Gases anderem 4-Amino-2,2,6,6-tetramethylpiperidin genannt.

FR 2900841 und US 2007/0286783 beschreiben Verfahren zur Entsäuerung von Abgasen, bei denen aus dem beladenen Absorptionsmedium die mit CO₂ umgesetzte reaktive Verbindung durch Extraktion abgetrennt wird. Als reaktive Verbindung zur Absorption eines sauren Gases wird unter anderem 4-Amino-2,2,6,6-tetramethylpiperidin genannt.

WO 2010/089257 beschreibt ein Verfahren zur Absorption von CO₂ aus einer Gasmischung, das ein Absorptionsmedium verwendet, das Wasser und ein 4-Amino-2,2,6,6-tetramethylpiperidin umfasst, wobei das Amin an der 4-Aminogruppe alkyliert sein kann. Bei Absorptionsmedien, die 4-Amino-2,2,6,6-tetramethylpiperidin als Absorptionsmittel enthalten, kommt es allerdings bei der Absorption von CO₂ leicht zur Ausfällung des Carbamatsalzes. WO 2010/089257 beschreibt den Zusatz von Lösungsmitteln, wie Sulfolan oder ionischen Flüssigkeiten, um das Absorptionsmedium einphasig zu halten und eine höhere Absorptionskapazität für CO₂ zu erzielen.

Es besteht deshalb weiterhin ein Bedarf nach einem Verfahren zur Absorption von CO₂ aus einer Gasmischung, mit dem gleichzeitig eine hohe Absorptionskapazität für CO₂ bei einer hohen Absorptionsrate erreicht werden kann und bei dem sich auch ohne Zusatz eines Lösungsmittels eine Trennung in zwei flüssige Phasen oder die Ausfällung eines Feststoffs bei der Absorption von CO₂ und der Regenerierung des Absorptionsmediums vermeiden lässt.

Es wurde nun gefunden, dass sich diese Aufgabe lösen lässt durch die Verwendung eines Absorptionsmediums, das ein an der 4-Aminogruppe substituiertes 4-Amino-2,2,6,6-tetramethylpiperidin enthält, dessen an der 4-Aminogruppe befindlicher Substituent eine geeignete, die Wasserlöslichkeit erhöhende funktionelle Gruppe trägt.

Gegenstand der Erfindung ist deshalb ein Verfahren zur Absorption von CO₂ aus einer Gasmischung durch in Kontakt bringen der Gasmischung mit einem Absorptionsmedium, das Wasser und mindestens ein Amin der Formel (I) 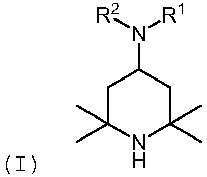 umfasst, worin
R¹ ein Rest -(CH₂)ₙ-(XCH₂CH₂)ₘ-Y-R³ ist mit
R³ = Wasserstoff oder Alkylrest mit 1 bis 6 Kohlenstoffatomen,
X und Y unabhängig voneinander NR³, Sauerstoff, SO oder SO₂ sind, wobei für Y = SO und für Y = SO₂ R³ nicht Wasserstoff ist und wobei Y-R³ ein N-Morpholinylrest oder ein N-Piperazylrest sein kann,
n = 2 bis 4 ist,
m = 0 bis 4 ist und
R² Wasserstoff, ein Alkylrest mit 1 bis 6 Kohlenstoffatomen oder ein Rest R¹ ist.
M muss allerdings von 0 verschieden sein wenn R² kein Rest R¹ ist, Y = NR³ ist und Y-R³ weder ein N-Morpholinylrest noch ein N-Piperazylrest ist.

Vorzugsweise sind in Formel (I) X und Y unabhängig voneinander NR³ oder Sauerstoff.

In einer besonders bevorzugten Ausführungsform ist in Formel (I) Y Sauerstoff, wobei dann besonders bevorzugt R³ Methyl oder Wasserstoff ist. Für diese Ausführungsform besonders geeignete Amine der Formel (I) sind 4-(2-Hydroxyethylamino)-2,2,6,6-tetramethylpiperidin mit R¹ = -(CH₂)₂OH und R² = Wasserstoff, 4-[Bis(2-Hydroxyethyl)amino]-2,2,6,6-tetramethylpiperidin mit R¹, R² = -(CH₂)₂OH und R² = Wasserstoff, 4-(2-Methoxyethylamino)-2,2,6,6-tetramethylpiperidin mit R¹ = -(CH₂)₂OCH₃ und R² = Methyl, sowie 4-(2-Hydroxyethylaminoethylamino)-2,2,6,6-tetramethylpiperidin mit R¹ = -(CH₂)₂NH(CH₂)₂OH und R² = Wasserstoff.

In einer weiteren besonders bevorzugten Ausführungsform ist in Formel (I) Y-R³ ein N-Morpholinylrest oder ein N-Piperazylrest. Für diese Ausführungsform besonders geeignete Amine der Formel (I) sind 4-(2-Piperazinoethylamino)-2,2,6,6-tetramethylpiperidin mit R¹ = -(CH₂)₂Y-R³ und Y-R³ = N-Piperazyl und 4-(2-Morpholinopropylamino)-2,2,6,6-tetramethylpiperidin mit R¹ = -(CH₂)₃Y-R³ und Y-R³ = N-Morpholinyl.

Bei beiden besonders bevorzugten Ausführungsformen ist in Formel (I) vorzugsweise m = 0.

Vorzugsweise werden im erfindungsgemäßen Verfahren Amine der Formel (I) verwendet, für die n = 2 oder 3 ist, wobei besonders bevorzugt n = 2 ist.

Amine der Formel (I) können aus handelsüblichem Triacetonamin durch reduktive Aminierung hergestellt werden, wobei Triacetonamin mit einem Amin der Formel R¹R²NH und Wasserstoff in Gegenwart eines Hydrierkatalysators umgesetzt werden. Zur Herstellung von Aminen der Formel (I) die eine Gruppe X oder Y = SO oder SO₂ enthalten, wird die reduktive Aminierung vorzugsweise mit einem Amin R¹R²NH durchgeführt, das an Stelle der Gruppe SO oder SO₂ ein Schwefelatom aufweist und in einem nachfolgenden Schritt die Thioethergruppe des erhaltenen Produkts mit einem Oxidationsmittel zur Gruppe SO oder SO₂ oxidiert. Als Oxidationsmittel eignen sich dazu Wasserstoffperoxid, vorzugsweise in Gegenwart eines Katalysators, wie z.B. Molybdat, sowie Peroxycarbonsäuren, vorzugsweise Peroxyessigsäure.

Bei dem erfindungsgemäßen Verfahren beträgt der Gehalt an Aminen der Formel (I) im Absorptionsmedium vorzugsweise 10 bis 60 Gew.-%, besonders bevorzugt 20 bis 50 Gew.-%. Der Gehalt bezieht sich dabei auf das Absorptionsmedium ohne absorbiertes CO₂.

Bei dem erfindungsgemäßen Verfahren kann das Absorptionsmedium zusätzlich zu Wasser und Aminen der Formel (I) noch ein oder mehrere physikalische Lösungsmittel enthalten, die mit CO₂ keine chemische Reaktion eingehen. Der Anteil an physikalischen Lösungsmitteln kann dabei bis zu 50 Gew.-% betragen. Als physikalische Lösungsmittel (C) eignen sich Sulfolan, aliphatische Säureamide, wie N-Formylmorpholin, N-Acetylmorpholin, N-Alkylpyrrolidone, insbesondere N-Methyl-2-pyrrolidon, oder N-Alkylpiperidone, sowie Diethylenglykol, Triethylenglykol und Polyethylenglykole und deren Alkylether, insbesondere Diethylenglykolmonobutylether. Vorzugsweise enthält das erfindungsgemäße Absorptionsmedium jedoch kein physikalisches Lösungsmittel.

Bei dem erfindungsgemäßen Verfahren kann das Absorptionsmedium zusätzlich noch weitere Additive, wie Korrosionsinhibitoren, benetzungsfördernde Additive und Entschäumer aufweisen.

Als Korrosionsinhibitoren können im erfindungsgemäßen Verfahren alle Stoffe verwendet werden, die dem Fachmann zur Absorption von CO₂ unter Verwendung von Alkanolaminen als geeignete Korrosionsinhibitoren bekannt sind, insbesondere die in US 4,714,597 beschriebenen Korrosionsinhibitoren. Die Menge an Korrosionsinhibitoren kann dabei deutlich geringer als bei Verwendung eines üblichen, Ethanolamin enthaltenden Absorptionsmedium gewählt werden, da Amine der Formel (I) gegenüber metallischen Werkstoffen deutlich weniger korrosiv sind als Ethanolamin.

Als benetzungsförderndes Additiv werden vorzugsweise die aus WO 2010/089257 Seite 11, Zeile 18 bis Seite 13, Zeile 7 bekannten nichtionischen Tenside, zwitterionischen Tenside und kationischen Tenside verwendet.

Als Entschäumer können im erfindungsgemäßen Verfahren alle Stoffe verwendet werden, die dem Fachmann zur Absorption von CO₂ unter Verwendung von Alkanolaminen als geeignete Entschäumer bekannt sind.

Im erfindungsgemäßen Verfahren kann die Gasmischung ein Erdgas, ein Methan enthaltendes Biogas aus einer Fermentation, Kompostierung oder Kläranlage, ein Verbrennungsabgas, ein Abgas aus einer Kalzinierungsreaktion, wie dem Brennen von Kalk oder der Herstellung von Zement, ein Restgas aus einem Hochofenprozess zur Eisenherstellung, ein Gasstrom in einer Raffinerie oder eine aus einer chemischen Umsetzung resultierende Gasmischung, wie beispielsweise ein Kohlenmonoxid und Wasserstoff enthaltendes Synthesegas oder ein Reaktionsgas einer Wasserstoffherstellung durch Dampfreformieren sein. Vorzugsweise ist die Gasmischung ein Verbrennungsabgas, ein Erdgas oder ein Biogas.

Die Gasmischung weist vor dem in Kontakt bringen mit dem Absorptionsmedium vorzugsweise einen Gehalt an CO₂ im Bereich von 0,1 bis 60 Vol-% auf, besonders bevorzugt im Bereich von 1 bis 40 Vol-%.

Die Gasmischung kann neben CO₂ noch weitere saure Gase aus der Reihe COS, H₂S, CH₃SH und SO₂ enthalten. Ein Verbrennungsabgas wird vorzugsweise vorher entschwefelt, d.h. SO₂ wird aus der Gasmischung mit einem aus dem Stand der Technik bekannten Entschwefelungsverfahren, vorzugsweise durch eine Gaswäsche mit Kalkmilch, entfernt, bevor das erfindungsgemäße Verfahren durchgeführt wird.

Für das erfindungsgemäße Verfahren können alle zum in Kontakt bringen einer Gasphase mit einer Flüssigphase geeigneten Apparate verwendet werden, um die Gasmischung mit dem Absorptionsmedium in Kontakt zu bringen. Vorzugsweise werden aus dem Stand der Technik bekannte Gaswäscher oder Absorptionskolonnen verwendet, beispielsweise Membrankontaktoren, Radialstromwäscher, Strahlwäscher, Venturi-Wäscher, Rotations-Sprühwäscher Füllkörperkolonnen, Packungskolonnen oder Bodenkolonnen. Besonders bevorzugt werden Absorptionskolonnen im Gegenstrombetrieb verwendet.

Im erfindungsgemäßen Verfahren wird die Absorption von CO₂ vorzugsweise bei einer Temperatur des Absorptionsmediums im Bereich von 0 bis 80°C, besonders bevorzugt 20 bis 60°C, durchgeführt. Bei Verwendung einer Absorptionskolonne im Gegenstrombetrieb beträgt die Temperatur des Absorptionsmediums besonders bevorzugt 30 bis 60°C beim Eintritt in die Kolonne und 35 bis 80°C beim Austritt aus der Kolonne.

Die Absorption von CO₂ wird vorzugsweise bei einem Druck der Gasmischung im Bereich von 0,5 bis 90 bar, besonders bevorzugt 0,9 bis 30 bar, durchgeführt. Der Partialdruck von CO₂ in der Gasmischung vor der Absorption liegt dabei vorzugsweise im Bereich von 0,1 bis 10 bar. Eine Absorption von CO₂ aus Ergas wird vorzugsweise bei einem Druck der Gasmischung im Bereich von 5 bis 90 bar, besonders bevorzugt 10 bis 80 bar, durchgeführt. Eine Absorption von CO₂ aus einem Verbrennungsabgas wird vorzugsweise bei einem Druck der Gasmischung im Bereich von 0,8 bis 1,5 bar, besonders bevorzugt 0,9 bis 1,1 bar, durchgeführt, damit das Verbrennungsabgas nicht vorher verdichtet werden muss.

In einer bevorzugten Ausführungsform des erfindungsgemäßen Verfahrens wird im Absorptionsmedium absorbiertes CO₂ durch Erhöhen der Temperatur und/oder Verringern des Drucks wieder desorbiert und das Absorptionsmedium nach dieser Desorption von CO₂ wieder zur Absorption von CO₂ verwendet. Durch einen solchen zyklischen Prozess aus Absorption und Desorption kann CO₂ aus der Gasmischung ganz oder teilweise abgetrennt und getrennt von anderen Komponenten der Gasmischung erhalten werden.

Alternativ zum Erhöhen der Temperatur oder dem Verringern des Drucks oder zusätzlich zu einer Temperaturerhöhung und/oder Druckverringerung kann auch eine Desorption durch Strippen des mit CO₂ beladenen Absorptionsmediums mit einem Gas durchgeführt werden.

Wenn bei der Desorption von CO₂ zusätzlich auch Wasser aus dem Absorptionsmedium entfernt wird, kann dem Absorptionsmedium vor der Wiederverwendung zur Absorption gegebenenfalls noch Wasser zugesetzt werden.

Für die Desorption können alle Apparate verwendet werden, die aus dem Stand der Technik zur Desorption eines Gases aus einer Flüssigkeit bekannt sind. Vorzugsweise wird die Desorption in einer Desorptionskolonne durchgeführt. Alternativ kann die Desorption von CO₂ auch in einer oder mehreren Flash-Verdampfungsstufen durchgeführt werden.

Die Desorption wird vorzugsweise bei einer Temperatur des Absorptionsmediums im Bereich von 50 bis 200°C, besonders bevorzugt 80 bis 180°C, durchgeführt. Die Temperatur bei der Desorption liegt dabei vorzugsweise mindestens 20 °C, besonders bevorzugt mindestens 50 °C, oberhalb der Temperatur bei der Absorption. Besonders bevorzugt wird die Absorption bei einer Temperatur im Bereich von 0 bis 80°C und die Desorption bei einer höheren Temperatur im Bereich von 50 bis 200°C durchgeführt.

Bei einer Desorption durch Verringern des Drucks wird die Desorption von CO₂ vorzugsweise bei einem Gesamtdruck in der Gasphase im Bereich von 0,01 bis 10 bar, insbesondere 0,1 bis 5 bar, durchgeführt. Der Druck bei der Desorption liegt dabei vorzugsweise mindestens 1,5 bar, besonders bevorzugt mindestens 4 bar, unterhalb des Drucks bei der Absorption und liegt am meisten bevorzugt bei Atmosphärendruck. Besonders bevorzugt wird die Absorption bei einem Druck im Bereich von 0,8 bis 90 bar und die Desorption bei einem niedrigeren Druck im Bereich von 0,01 bis 10 bar durchgeführt.

Mit dem erfindungsgemäßen Verfahren kann durch die Verwendung von Aminen der Formel (I) gleichzeitig eine hohe Absorptionskapazität für CO₂ und eine für eine technische Anwendung ausreichend hohe Absorptionsrate erzielt werden. Durch die Verwendung von Aminen der Formel (I) kann bei der Absorption von CO₂ eine Ausfällung eines Feststoffs auch ohne Zusatz eines Lösungsmittels zuverlässig vermieden werden und bei der Desorption von CO₂ eine Phasentrennung des Absorptionsmediums in zwei flüssige Phasen vermieden werden. Das erfindungsgemäße Verfahren kann deshalb ohne Störungen in einfach aufgebauten Anlagen eingesetzt werden, wie sie im Stand der Technik zur Gaswäsche mit wässrigen Lösungen von Ethanolamin eingesetzt werden und erreicht dabei eine im Vergleich zu Ethanolamin verbesserte Absorptionsleistung für CO₂. Außerdem ist bei der Desorption der Austrag an Absorptionsmittel geringer als mit Ethanolamin.

In einer bevorzugten Ausführungsform des erfindungsgemäßen Verfahrens erfolgt die Desorption zuerst durch Druckerniedrigung in einer oder mehreren aufeinanderfolgenden Flash-Verdampfungsstufen gefolgt von Strippen mit einem Inertgas, wie beispielsweise Luft oder Stickstoff, in einer Desorptionskolonne. In der letzten Flash-Verdampfungsstufen wird der Druck vorzugsweise auf 1 bis 5 bar, besonders bevorzugt auf 1 bis 2 bar abgesenkt. Das Strippen in der Desorptionskolonne erfolgt vorzugsweise bei einer Temperatur des Absorptionsmediums im Bereich von 60 bis 100°C. Durch die Kombination von Flash-Verdampfung und Strippen kann mit geringem Energiebedarf ein niedriger Restgehalt des Absorptionsmediums an CO₂ nach Desorption erreicht werden. Auf diese Weise kann die erforderliche Menge an Absorptionsmedium im Gesamtprozess gesenkt werden und der Bedarf an thermischer Energie für die Desorption von CO₂ verringert werden.

Die nachfolgenden Beispiele verdeutlichen die Erfindung, ohne jedoch den Gegenstand der Erfindung zu beschränken.

### Beispiele

Zur Bestimmung der CO₂-Beladung, des CO₂-Hubs und der relativen Absorptionsrate wurden 150 g Absorptionsmedium aus 45 g Amin und 105 g Wasser in einem thermostatisierbaren Behälter mit aufgesetztem und auf 3°C gekühltem Rückflusskühler vorgelegt. Nach Aufheizen auf 40°C bzw. 100°C wurde über eine Fritte am Behälterboden eine Gasmischung aus 14 Vol-% CO₂, 80 Vol-% Stickstoff und 6 Vol-% Sauerstoff mit einer Flussrate von 59 1/h durch das Absorptionsmedium geleitet und die CO₂-Konzentration im aus dem Rückflusskühler austretenden Gasstrom über die IR-Absorption mit einem CO₂-Analysator bestimmt. Durch Integration der Differenz des CO₂-Gehalts im eingeleiteten Gasstrom und im austretenden Gasstrom wurde die aufgenommene CO₂-Menge ermittelt und die Gleichgewichtsbeladung des Absorptionsmediums mit CO₂ berechnet. Der CO₂-Hub wurde als Differenz der bei 40°C und 100°C aufgenommenen CO₂-Mengen berechnet. Aus der Steigung der Kurve der CO₂-Konzentration im austretenden Gasstrom für den Konzentrationsanstieg von 1 Vol-% auf 12 Vol-% wurde eine relative Absorptionsrate von CO₂ im Absorptionsmedium bestimmt. Die untersuchten Amine sind in Tabelle 1 mit der so bestimmten Gleichgewichtsbeladungen bei 40 und 100°C in mol CO₂ / mol Amin, dem CO₂-Hub in mol CO₂ / mol Amin, der auf Beispiel 1 mit 100 % bezogene relative Absorptionsrate von CO₂ und dem Siedepunkt des Amins angeführt.

Zur Bestimmung der Entmischungstemperatur wurde das Absorptionsmedium in einem verschlossenen druckfesten Glasbehälter langsam erhitzt, bis eine Trübung oder Trennung in zwei flüssige Phasen erkennbar war. Ein mit dem Symbol > gekennzeichneter Eintrag bedeutet, dass bis zu dieser Temperatur keine Entmischung eintrat und der Versuch aus Sicherheitsgründen bei der angegebenen Temperatur beendet wurde.

Die in Tabelle 1 verwendeten Abkürzungen haben folgende Bedeutungen:
MEA: Ethanolamin
TAD: 4-Amino-2,2,6,6-tetramethylpiperidin
Pr-TAD: 4-(n-Propylamino)-2,2,6,6-tetramethylpiperidin
Bu-TAD: 4-(n-Butylamino)-2,2,6,6-tetramethylpiperidin Amin 1:
4-(2-Hydroxyethylamino)-2,2,6,6-tetramethylpiperidin Amin 2:
4-(2-Methoxyethylamino)-2,2,6,6-tetramethylpiperidin Amin 3:
4-(2-Hydroxyethylaminoethylamino)-2,2,6,6-tetramethylpiperidin Amin 4:
4-[Bis(2-Hydroxyethyl)amino]-2,2,6,6-tetramethylpiperidin Amin 5:
4-(2-Piperazinoethylamino)-2,2,6,6-tetramethylpiperidin Amin 6:
4-(2-Morpholinopropylamino)-2,2,6,6-tetramethylpiperidin

**Tabelle 1**

| Beispiel | Amin | Beladung bei 40°C in mol/mol | Beladung bei 100°C in mol/mol | CO₂-Hub in mol/mol | Relative Absorptionsrate in % | Siedepunkt Amin in °C bei Druck (in mbar) | Entmischungstemperatur in °C |
|---|---|---|---|---|---|---|---|
| 1* | MEA | 0,45 | 0,22 | 0,23 | 100 | 69 (10) | n.b. |
| 2* | TAD | ** | 0,54 | ** | ** | 79 (10) | n.b. |
| 3* | Pr-TAD | 1,53 | 0,39 | 1,14 | 41 | 102 (14) | 70 |
| 4* | Bu-TAD | 1,38 | 0,20 | 1,18 | 50 | 251 (1013) | 45 |
| 5 | Amin 1 | 1,15 | 0,39 | 0, 76 | 27 | 142 (11) | > 90 |
| 6 | Amin 2 | 1,13 | 0,33 | 0,80 | 34 | 117 (12) | 116 |
| 7 | Amin 3 | 1,56 | 0,64 | 0,92 | 52 | 166 (3) | > 120 |
| 8 | Amin 4 | 1,14 | 0,37 | 0,77 | 28 | 194 (10) | > 90 |
| 9 | Amin 5 | 1,70 | 0,79 | 0,91 | 75 | 123 (5) | > 145 |
| 10 | Amin 6 | 1,26 | 0,29 | 0, 97 | 89 | 113 (1) | 124 |

| | | | | | | | |
|---|---|---|---|---|---|---|---|
| * nicht erfindungsgemäß ** Beim Begasen fiel Feststoff aus n.b. nicht bestimmt | | | | | | | |

Für die Absorptionsmedien der Beispiele 1 und 8 wurde außerdem die Korrosionsrate des Stahls C22 (Werkstoffnummer 1.0402) in Kontakt mit dem Absorptionsmedium durch Messung des potentiodynamischen Polarisationswiderstands und Auswertung durch Tafel-Plot nach der Methode ASTM G59-97 (2009) ermittelt. Die Ergebnisse sind in Tabelle 2 zusammengestellt.

**Tabelle 2**

| Beispiel | Amin | Korrosionsrate in mm/Jahr |
|---|---|---|
| 1 | MEA | 1, 99 |
| 8 | Amin 4 | 0,19 |

## Patentansprüche

1. Verfahren zur Absorption von CO₂ aus einer Gasmischung durch in Kontakt bringen der Gasmischung mit einem Absorptionsmedium, **dadurch gekennzeichnet, dass** das Absorptionsmedium Wasser und mindestens ein Amin der Formel (I) 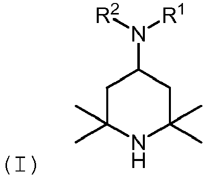 umfasst, worin
R¹ ein Rest -(CH₂)ₙ-(XCH₂CH₂)ₘ-Y-R³ ist mit
R³ = Wasserstoff oder Alkylrest mit 1 bis 6 Kohlenstoffatomen,
X und Y unabhängig voneinander NR³, Sauerstoff, SO oder SO₂ sind, wobei für Y = SO und für Y = SO₂ R³ nicht Wasserstoff ist und wobei Y-R³ ein N-Morpholinylrest oder ein N-Piperazylrest sein kann, n = 2 bis 4 ist,
m = 0 bis 4 ist und
R² Wasserstoff, ein Alkylrest mit 1 bis 6 Kohlenstoffatomen oder ein Rest R¹ ist,
wobei m von 0 verschieden ist wenn R² kein Rest R¹ ist, Y = NR³ ist und Y-R³ kein N-Morpholinylrest und kein N-Piperazylrest ist.

2. Verfahren nach Anspruch 1, **dadurch gekennzeichnet, dass** in Formel (I) X und Y unabhängig voneinander NR³ oder Sauerstoff sind.

3. Verfahren nach Anspruch 2, **dadurch gekennzeichnet, dass** in Formel (I) Y Sauerstoff ist.

4. Verfahren nach Anspruch 3, **dadurch gekennzeichnet, dass** in Formel (I) R³ Methyl oder Wasserstoff ist.

5. Verfahren nach Anspruch 1, **dadurch gekennzeichnet, dass** in Formel (I) Y-R³ ein N-Morpholinylrest oder ein N-Piperazylrest ist.

6. Verfahren nach einem der Ansprüche 3 bis 5, **dadurch gekennzeichnet, dass** in Formel (I) m = 0 ist.

7. Verfahren nach einem der Ansprüche 1 bis 6, **dadurch gekennzeichnet, dass** in Formel (I) n = 2 oder 3 ist und bevorzugt n = 2 ist.

8. Verfahren nach einem der Ansprüche 1 bis 7, **dadurch gekennzeichnet, dass** der Gehalt an Aminen der Formel (I) im Absorptionsmedium 10 bis 60 Gew.-%, vorzugsweise 20 bis 50 Gew.-% beträgt.

9. Verfahren nach einem der Ansprüche 1 bis 8, **dadurch gekennzeichnet, dass** die Gasmischung ein Verbrennungsabgas, ein Erdgas oder ein Biogas ist.

10. Verfahren nach einem der Ansprüche 1 bis 9, **dadurch gekennzeichnet, dass** im Absorptionsmedium absorbiertes CO₂ durch Erhöhen der Temperatur und/oder Verringern des Drucks wieder desorbiert wird und das Absorptionsmedium nach dieser Desorption von CO₂ wieder zur Absorption von CO₂ verwendet wird.

11. Verfahren nach Anspruch 10, **dadurch gekennzeichnet, dass** die Absorption bei einer Temperatur im Bereich von 0 bis 80°C und die Desorption bei einer höheren Temperatur im Bereich von 50 bis 200°C durchgeführt wird.

12. Verfahren nach Anspruch 10 oder 11, **dadurch gekennzeichnet, dass** die Absorption bei einem Druck im Bereich von 0,8 bis 90 bar und die Desorption bei einem niedrigeren Druck im Bereich von 0,01 bis 10 bar durchgeführt wird.

## Claims

1. Method of absorbing CO₂ from a gas mixture by contacting the gas mixture with an absorption medium **characterized in that** the absorption medium comprises water and at least one amine of formula (I) 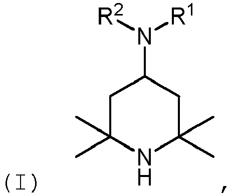 where
R¹ is a -(CH₂)ₙ-(XCH₂CH₂)ₘ-Y-R³ radical where
R³ = hydrogen or an alkyl radical having from 1 to 6 carbon atoms,
X and Y are each, independently of one another, NR³, oxygen, SO or SO₂, where in the case of Y = SO and in the case of Y = SO₂, R³ is not hydrogen, and Y-R³ can be an N-morpholinyl radical or an N-piperazyl radical,
n = 2 to 4,
m = 0 to 4 and
R² is hydrogen, an alkyl radical having from 1 to 6 carbon atoms or a radical R¹,
where m is different from 0 when R² is not a radical R¹, Y = NR³ and Y-R³ is not an N-morpholinyl radical and not an N-piperazyl radical.

2. Method according to Claim 1, **characterized in that** X and Y in formula (I) are each, independently of one another, NR³ or oxygen.

3. Method according to Claim 2, **characterized in that** Y in formula (I) is oxygen.

4. Method according to Claim 3, **characterized in that** R³ in formula (I) is methyl or hydrogen.

5. Method according to Claim 1, **characterized in that** Y-R³ in formula (I) is an N-morpholinyl radical or an N-piperazyl radical.

6. Method according to any one of Claims 3 to 5, **characterized in that** m in formula (I) is 0.

7. Method according to any one of Claims 1 to 6, **characterized in that** n in formula (I) is 2 or 3 and is preferably 2.

8. Method according to any one of Claims 1 to 7, **characterized in that** the content of amines of formula (I) in the absorption medium is from 10 to 60% by weight, preferably from 20 to 50% by weight.

9. Method according to any one of Claims 1 to 8, **characterized in that** the gas mixture is a combustion off-gas, a natural gas or a biogas.

10. Method according to any one of Claims 1 to 9, **characterized in that** CO₂ absorbed in the absorption medium is desorbed again by increasing the temperature and/or reducing the pressure and the absorption medium after this desorption of CO₂ is used again for absorbing CO₂.

11. Method according to Claim 10, **characterized in that** the absorption is carried out at a temperature in the range from 0 to 80°C and the desorption is carried out at a higher temperature in the range from 50 to 200°C.

12. Method according to Claim 10 or 11, **characterized in that** the absorption is carried out at a pressure in the range from 0.8 to 90 bar and the desorption is carried out at a lower pressure in the range from 0.01 to 10 bar.

## Revendications

1. Procédé d'absorption de CO₂ à partir d'un mélange gazeux par mise en contact du mélange gazeux avec un milieu d'absorption, **caractérisé en ce que** le milieu d'absorption comprend de l'eau et au moins une amine de formule (I) 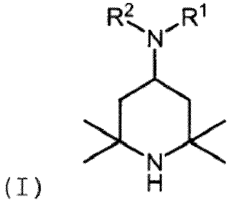 dans laquelle
R¹ est un radical -(CH₂)ₙ-(XCH₂CH₂)ₘ-Y-R³, avec
R³ = l'hydrogène ou radical alkyle de 1 à 6 atomes de carbone,
X et Y sont indépendamment l'un de l'autre NR³, oxygène, SO ou SO₂, lorsque Y = SO et Y = SO₂, R³ n'étant pas l'hydrogène et Y-R³ pouvant être un radical N-morpholinyle ou un radical N-pipérazyle,
n = 2 à 4,
m = 0 à 4, et
R² est l'hydrogène, un radical alkyle de 1 à 6 atomes de carbone ou un radical R¹,
m étant différent de 0 lorsque R² n'est pas un radical R¹, Y = NR³ et Y-R³ n'est pas un radical N-morpholinyle et n'est pas un radical N-pipérazyle.

2. Procédé selon la revendication 1, **caractérisé en ce que**, dans la formule (I), X et Y sont indépendamment l'un de l'autre NR³ ou l'oxygène.

3. Procédé selon la revendication 2, **caractérisé en ce que**, dans la formule (I), Y est l'oxygène.

4. Procédé selon la revendication 3, **caractérisé en ce que**, dans la formule (I), R³ est méthyle ou hydrogène.

5. Procédé selon la revendication 1, **caractérisé en ce que**, dans la formule (I), Y-R³ est un radical N-morpholinyle ou un radical N-pipérazyle.

6. Procédé selon l'une quelconque des revendications 3 à 5, **caractérisé en ce que**, dans la formule (I), m = 0.

7. Procédé selon l'une quelconque des revendications 1 à 6, **caractérisé en ce que**, dans la formule (I), n = 2 ou 3, et de préférence n = 2.

8. Procédé selon l'une quelconque des revendications 1 à 7 **caractérisé en ce que** la teneur en amines de formule (I) dans le milieu d'absorption est de 10 à 60 % en poids, de préférence de 20 à 50 % en poids.

9. Procédé selon l'une quelconque des revendications 1 à 8, **caractérisé en ce que** le mélange gazeux est un gaz d'échappement de combustion, un gaz naturel ou un biogaz.

10. Procédé selon l'une quelconque des revendications 1 à 9, **caractérisé en ce que** le CO₂ absorbé dans le milieu d'absorption est désorbé par élévation de la température et/ou réduction de la pression, et le milieu d'absorption est réutilisé pour l'absorption de CO₂ après cette désorption de CO₂.

11. Procédé selon la revendication 10, **caractérisé en ce que** l'absorption est réalisée à une température dans la plage allant de 0 à 80 °C et la désorption à une température plus élevée dans la plage allant de 50 à 200 °C.

12. Procédé selon la revendication 10 ou 11, **caractérisé en ce que** l'absorption est réalisée à une pression dans la plage allant de 0,8 à 90 bar et la désorption à une pression plus basse dans la plage allant de 0,01 à 10 bar.
